# EUROPEAN PATENT APPLICATION

(11) **EP 4 696 994 A1**
(43) Date of publication of application: **18.02.2026**
(21) Application number: 24194336.4
(22) Date of filing: 13.08.2024
(51) Int. Cl.: G01G 19/08

(54) **METHOD FOR DETERMINING LOADING EVENT OF A VEHICLE AT A SITE**

(71) Applicant: Volvo Truck Corporation, 405 08 Göteborg (SE)
(72) Inventor: SYLVÉN, Martin, 436 39 ASKIM (SE)
(74) Representative: Ström & Gulliksson AB

(57) **Abstract**

A computer system comprising processing circuitry (702) configured to detect a change in weight (120) of the vehicle (10) when the vehicle is stationary or moving at a reduced speed, as a response to detecting the change in weight (120), determine vehicle data (110) of the vehicle (10), wherein the vehicle data (110) at least comprises positioning data (112) and time data (114). The processing circuitry (702) is configured to determine a loading event (102) or an off-loading event (104) of the vehicle (10), wherein the determination at least is based on the detected change in weight of the vehicle (10); and determine loading event information (130), wherein the loading event information (130) at least comprises the vehicle data (110) and the loading event (102) or off-loading event (104).

## Description

### TECHNICAL FIELD

The disclosure relates generally to vehicles. In particular aspects, the disclosure relates to a method for determining loading event of a vehicle at a site. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles are often used to transport different kinds of goods. The process of loading and off-loading vehicles at various sites is a critical operation in many industries, including logistics, manufacturing, construction, and retail. This process involves the transfer of goods, materials, or equipment from one location to another, ensuring the efficient and safe handling of items. The loading and off-loading may be performed at a site, being a loading and/or off-loading site. The site may be manually operated, or partly or fully mechanical or automated. The site is normally equipped with a stationary scale with the purpose of determining the weight of the goods being transported. The weight of the goods is then used to determine an appropriate fee for the loading/off-loading.

There is a need to increase the efficiency of weighing goods a site.

### SUMMARY

According to a first aspect of the disclosure, a computer system comprising processing circuitry configured to: detect a change in weight of the vehicle when the vehicle is stationary or moving at a reduced speed, obtain vehicle data of the vehicle, wherein the vehicle data at least comprises positioning data and time data; determine a loading event or an off-loading event of the vehicle, wherein the determination at least is based on the detected change in weight of the vehicle; and determine loading event information, wherein the loading event information at least comprises the vehicle data and the determined loading event or off-loading event. The first aspect of the disclosure may seek to provide an efficient way of eliminating the need of physical scales at loading/off-loading sites. A technical benefit may include that the vehicle itself can determine if a loading or off-loading event has taken place, without the need of a physical scale at the site. A technical benefit may include that the site is cheaper to maintain, thus keeping the prices down for the goods that are store therein. Another technical benefit may include that it is possible to differentiate the weight of the goods being transported of each vehicle, which thus allows for an efficient way of determining the price that should be paid by the transporter for the goods.

Optionally in some examples, including in at least one preferred example, a computer system comprising processing circuitry configured to detect a change in weight of the vehicle when the vehicle is stationary or moving at a reduced speed, obtain vehicle data of the vehicle, determine a loading event or an off-loading event of the vehicle; and transmit at least the loading event or off-loading event to an external unit, wherein said external unit is configured to determine loading event information.

Optionally in some examples, including in at least one preferred example, a computer system comprising processing circuitry configured to detect a change in weight of the vehicle when the vehicle is stationary or moving at a reduced speed, obtain vehicle data of the vehicle, transmit the detected change in weight and the vehicle data to an external unit, wherein said external unit is configured to determine a loading event or an off-loading event of the vehicle and determine loading event information.

Optionally in some examples, including in at least one preferred example, the processing circuitry is further configured to determine loading event information by determine that the weight of the vehicle is stabilized; and determine a new total weight of the vehicle. A technical benefit may include providing a reliable weight estimation that could be used to determine if a load or off-loading event has taken place.

Optionally in some examples, including in at least one preferred example, the new total weight of the vehicle is determined using at least an on-board weight measurement system. A technical benefit may include providing a reliable weight estimation that could be used to determine if a load or off-loading event has taken place.

Optionally in some examples, including in at least one preferred example, the loading event information comprises site information, wherein the site information is identified at least based on the loading event or off-loading event and the vehicle data. A technical benefit may include that the loading event and the site can be associated, which provides important information to the driver or other stakeholders, such as the owner of the site or owner of the goods that is transported.

Optionally in some examples, including in at least one preferred example, the loading event information is transmitted to an external unit, wherein said external unit is configured to determine site information.

Optionally in some examples, including in at least one preferred example, the loading event information comprises driver information identifying the driver of the vehicle, wherein the driver information is determined at least based on the vehicle data. A technical benefit may include a simpler and more efficient way of processing the payment of the goods.

Optionally in some examples, including in at least one preferred example, the loading event information is transmitted to an external unit, wherein said external unit is configured to determine driver information.

Optionally in some examples, including in at least one preferred example, the loading event information further comprises billing information of the loading or off-loading event. A technical benefit may include a simpler and more efficient way of processing the payment of the goods.

Optionally in some examples, including in at least one preferred example, the loading event information is transmitted to an external unit, wherein said external unit is configured to billing site information.

Optionally in some examples, including in at least one preferred example, the vehicle data further comprises one or more of: energy consumption of the vehicle, ID-information of the driver, and an odometer value. A technical benefit may include a simpler and more efficient way of processing the payment of the goods.

Optionally in some examples, including in at least one preferred example, wherein the processing circuitry is further configured to determine a transportation mission based on the loading and/or off-loading event, wherein the transportation mission comprises at least one of transported weight, transport time, transported distance and energy consumed during transport. A technical benefit may include beneficial information to the driver or different stakeholders.

According to a second aspect of the disclosure, vehicle comprising the computer system of the first aspect is provided.

According to a third aspect of the disclosure, a computer-implemented method, comprising detecting, by processing circuitry of a computer system, a change in weight of the vehicle when the vehicle is stationary or moving at a reduced speed, obtaining, by the processing circuitry, vehicle data of the vehicle, wherein the vehicle data at least comprises positioning data and time data, determining, by the processing circuitry, a loading event or an off-loading event of the vehicle, wherein the determination is made based on the detected change in weight of the vehicle; and determining, by the processing circuitry, loading event information, wherein the loading event information at least comprises the vehicle data and the determined loading event or off-loading event.

Optionally in some examples, including in at least one preferred example, further comprising determining driver information identifying the driver of the vehicle at least based on positioning data of the vehicle data, and determining billing details of the loading or off-loading event.

According to a fourth aspect of the disclosure, a computer program product comprising program code for performing, when executed by the processing circuitry the third aspect of the disclosure.

According to a fifth aspect of the disclosure, a non-transitory computer-readable storage medium comprising instructions, which when executed by the processing circuitry, cause the processing circuitry to perform the third aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary view of a vehicle according to an example.
**FIG. 2** is a schematic view of a system according to an example.
FIGS. 3A-B are exemplary system diagrams of functionality of a computer system **(****FIG. 3A****)** and a computer system **(****FIG. 3B****).**
FIGS. 4A-B are flow charts of exemplary methods according to examples.
**FIG. 5** is a flow chart of an exemplary method according to an example.
FIGS. 6A-C are flow charts of exemplary methods according to examples.
**FIG. 7** is another view of **FIG. 3B****,** according to an example.
**FIG. 8** is a flow chart of an exemplary method according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As indicated in the above background section, the process around loading and off-loading a vehicle at a site can be made more efficient. More specifically, the service for identifying the load and off loading sites as well as creating correct billing information is targeted. In prior art systems, the loading sites needs to be equipped with physical scales in order to determine the correct payment of the loading/off-loading event. This is both time consuming for the drivers of the vehicle, as well as expensive for the site owners. The present disclosure provides an insightful approach where the need for a physical scales at the loading sites are eliminated. As will soon be described in detail, the system allows the vehicle to determine the change in weight. This information together with position data of the vehicle together identifies both the site and the loaded/off loaded amount. By identifying the site, it is also possible to at least indirect identify the driver/customer.

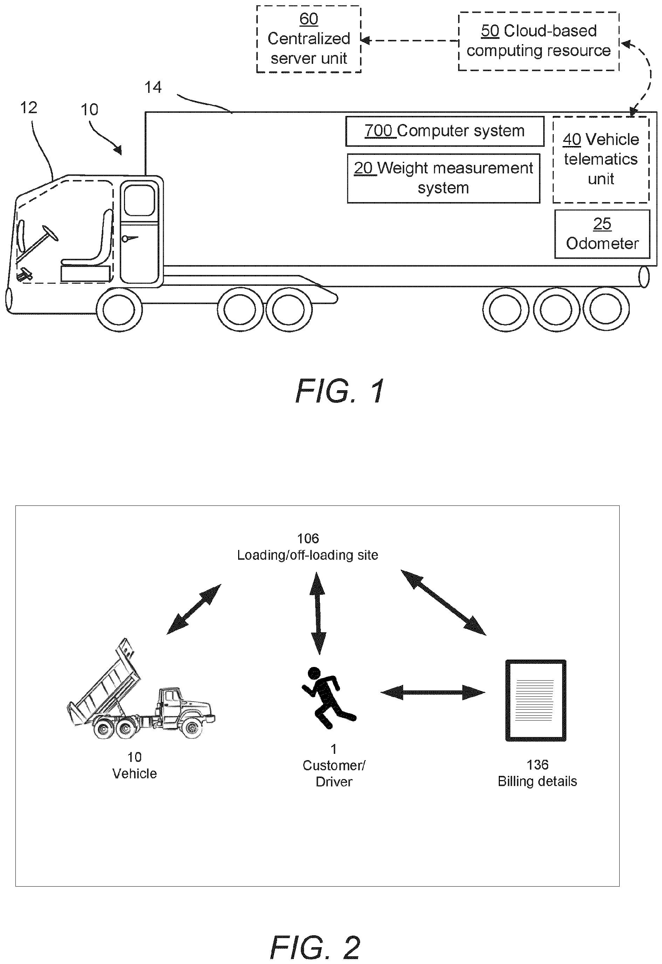

**FIG. 1** is an exemplary schematic illustration of a heavy-duty vehicle **10** (hereinafter referred to vehicle **10** for reasons of brevity). This particular example comprises a tractor unit **12** which is arranged to tow a trailer unit **14.** The vehicle combination may of course also comprise additional vehicle units, such as one or more dolly units and more than one trailer unit. Although the vehicle is illustrated as a tractor unit, it should be realized that other types of vehicles may be equally considered for the purpose of the herein described method such as busses, construction equipment, trucks, etc. As a non-limiting example, the vehicle **10** may be a dump truck, transfer dump truck, tipper truck, side dump truck, roll-off truck, live bottom trailer, or haul trucks. Although not explicitly visualized in the figure, the skilled person will appreciate that the vehicle **10** comprises all necessary vehicle units and associated functionality such that it may operate as the skilled person would expect of a vehicle **10.**

The vehicle **10** is supported by wheels **19,** where each wheel comprises a tire **18.** The tractor unit **12** has front wheels which are normally steered, and rear wheels of which at least one pair are driven wheels. Generally, the rear wheels of the tractor **12** may be mounted on tag or pusher axles. A tag axle is where the rear-most drive axle is non-powered, also referred to as a free-rolling or dead axle. A pusher axle is where the forward-most drive axle is not powered. The trailer unit **14** is supported on trailer wheels. Trailers with driven wheels, and even a steered axle, are also possible.

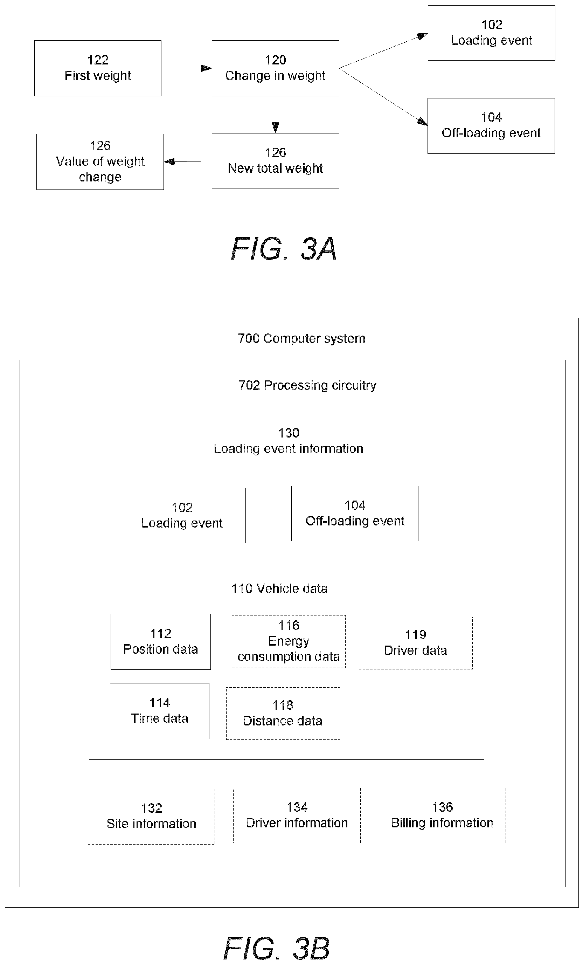

The vehicle **10** further comprises a computer system **700** comprising processing circuitry **702.** The computer system **700** will be described more in detail with reference to FIGS. 3A-B. The computer system **700** may comprises a vehicle control unit (VCU) arranged to control various functions of the vehicle **10.** For instance, the VCU may be arranged to perform a vehicle motion management (VMM) function comprising control of wheel slip, vehicle unit stability, and so on. The trailer unit optionally also comprises a VCU, which then controls one or more functions on the trailer. The VCU or VCUs may be communicatively coupled, e.g., via wireless link, to a remote server. This remote server may be arranged to perform various configurations of the ECU, and to provide various forms of data to the ECU, such as for example providing data regarding the make and type of tires mounted on the vehicle. The trailer unit **14** optionally also comprises one or more electronic control units (ECUs), which may be adapted to control one or more functionalities of the trailer unit **12.**

The computer system may be communicatively coupled, e.g., via wireless link, to a remote server **60.** This remote server may also be referred to as a centralized server unit **60.**

The computer system **700** may be configured to obtain information from different kinds of sensors or services. For example, the vehicle may be in communication with a weather service and/or a navigation service. In one example, the computer system **700** is in communication with vehicle state sensors such as radar sensors, sensors based on LiDAR and/or visions based sensors such as camera sensors and infrared detectors.

The vehicle **10** advantageously comprises a vehicle telematics unit **40.** The vehicle telematics unit **40** is configured for obtaining data from the vehicle **10,** such as from the computer system **700** or weight measurement system **20,** and communicate said data wirelessly to an external service. The results may be transmitted by the vehicle telematics unit **40** to a cloud-based computing resource **50** during an ongoing operation of the vehicle **10,** i.e., in online mode. Alternatively, or additionally, control signal responses may be sent as raw data to the cloud-based computing resource **50,** and subsequent obtaining, comparing and determining information may be performed by the cloud-based computing resource **50.** To this end, the determination steps may be carried out remote from the vehicle **10.** The operation of the vehicle **10** may be a particular usage of the vehicle **10,** such as a start-up at a first location, a drive to a second location, and a shutdown at said second location. Such online data transmission may be realized in at least near real-time, where at least near real-time is to be interpreted as involving some minor delay caused by, for instance, network connectivity, latencies, or other similar reasons. In some examples, batch processing and transfer of the data may be realized. In this particular example, the vehicle telematics unit **40** is configured to be in communication with a cloud-based computing resource **50.** The communication may be based on any known short-range or long-range standards or protocols known in the art. The following list of examples are some exemplary network/radio communication standards or protocols that may be employed by the vehicle telematics unit **40** and the cloud-based computing resource **50:** HTTP(S), TCP/IP, UDP, FTP, SMTP, DNS, DHCP, SSH, POP3, SCP, NFS, SFTP, ICMP, ARP, RTP, RTCP IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, any form of proximity-based device-to-device radio communication, LTE Direct, W-CDMA/HSPA, GSM, UTRAN, LTE, IPv4, IPv6, 6LoWPAN, IrDA, or 5GNR.

The cloud-based computing resource **50** may be implemented using any commonly known cloud-computing platform technologies, such as e.g. Amazon Web Services, Google Cloud Platform, Microsoft Azure, DigitalOcean, Oracle Cloud Infrastructure, IBM Bluemix or Alibaba Cloud. The cloud-based computing resource 50 may be included in a distributed cloud network that is widely and publically available, or alternatively limited to an enterprise. The cloud-based computing resource **50** may comprise a cloud-based storage unit. The cloud-based storage unit may be included with or external to the cloud-based computing resource **50.** Connection to the cloud-based storage unit may be established using DBaaS (Database-as-a-service). For instance, the cloud-based storage unit may be deployed as a SQL data model such as MySQL, PostgreSQL or Oracle RDBMS. Alternatively, deployments based on NoSQL data models such as MongoDB, Amazon DynamoDB, Hadoop or Apache Cassandra may be used. DBaaS technologies are typically included as a service in the associated cloud-based computing resource **50.**

The cloud-based computing resource **50** may be in further communication with a centralized server unit **60.** Communication between the cloud-based computing resource **50** and the centralized server unit **60** may be realized by any of the communication standards or protocols as mentioned above with respect to the cloud-based computing resource **50** and the vehicle telematics unit **40.** The centralized server unit **60** may be configured for collecting and analyzing data from a plurality of vehicles, and subsequently provide new and/or updated data to said plurality of vehicles based on various factors such as new contactor device types or characteristics.

In some examples, the determinations processes are not necessarily transferred from the vehicle telematics unit **40** to the centralized server unit **60** during an ongoing operation of the vehicle **10.** Instead, the determinations processes may be transferred in an offline fashion after the vehicle **10** has finished an operation. Hence, the vehicle telematics unit **40** is configured to store the identification results during the operation, but the transfer is not effected until after said operation is completed. This may be realized in certain situations, such as at vehicle workshops or other vehicle maintenance locations.

The vehicle **10** further comprises an on-board weight measurement system **20.** The on-board weight measurement system is configured to measure and/or estimate the weight of the vehicle **10.** The on-board weight measurement system may use different technology, for example using load cell technology or pressure readings from air suspension to calculate the weight on the vehicle axles. The on-board weight measurement system **20** may in one example comprise load-cell scales, air-suspension PSI gauges, air-suspension load scales and/or electronic scales with PSI sensors.

The vehicle **10** may further comprise an odometer **25.** The odometer **25** may be electronic, mechanical or electromechanical. The odometer **25** may be a trip odometer (trip meter).

The vehicle **10** can be arranged with a load. The load may for example be arranged in a container or trailer arranged in or on the vehicle **10.** The load may be any kind of load that has a weight. One example is bulk load, such as commodities. As a non-limiting examples the load may be coal, petroleum, grains, ores, chemicals, liquids or gas. The load may also be gravel, construction aggregate, potatoes, top soil, grain, carrots, sand, lime, peat moss, asphalt, compost, rip-rap, heavy rocks, biowaste, etc.

**FIG. 2** is a schematic illustration of a vehicle **10** being arranged at a site **106.** The site **106** may be a loading/off loading site. In one example, the site may be a loading site **106** where the vehicle **10** is being loaded with a load. The site **106** is then arranged with a storage of the load which is then being loaded onto the vehicle **10.** In one example, the site is an off-loading site **106** where the vehicle **10** is being off loaded. The site **106** is then arranged to receive a load of a vehicle **10.** In one example, the site **106** is both a loading and off loading site. Herein, the term loading/off-loading site **106** will cover all these examples. In one example, the site **106** comprises one or more loading docks or loading ramp.

A loading or off-loading event is typically associated with a cost for the driver **1** of the vehicle. The driver **1** of the vehicle **10** may thus also be referred to as the customer at the loading/off loading site. The cost of the loading/off loading event is at least in part based on the weight of the cargo being loaded or un-loaded at the site. The cost of the loading/off-loading event may further include accessorial charges. Accessorial charges may for example relate to special handling or equipment at the loading site. In one example the cost of the loading/off-loading event includes the cost of using a liftgate, pallet jacks or forklifts at the site. In one example, the cost of the loading/off-loading event includes costs of using additional time for performing the loading/off-loading event compared to the allocated time.

In prior art systems, the sites typically have a stationary scale. The prior art systems are often not able to bill two customers that are off-loading or loading at the same time, as the system can not differentiate the weight of each vehicle - it can just determine the total weight.

The billing details **136** of the load/off-loading event is correlated to the customer/driver **1.** This correlation may be based on different parameters, as will soon be described. The billing details **136** preferably comprises information relating to the cost of the loading/off-loading event. The billing details are associated with information relating to the identified customer. If the system identifies that there are customers associated to a position were a loading/off-loading event takes place, the system can automatically create the billing information. If the system cannot identify that there are customers in the associated position, an operator may create a customer for that specific position or export the generated data to manually create an invoice.

FIGS. 3A-B are schematic illustrations of a functions of a computer system **700** according to examples. In one example, the computer system **700** is configured to obtain or determine a first weight **122** of the vehicle. The first weight **122** of the vehicle is the weight before a loading or off-loading event has occurred. The first weight **122** of the vehicle can also be referred to as an initial weight. The computer system **700** is configured to detect a change in weight **120** of the vehicle **10.** The detected change in weight **120** is used to determine a loading event **102** or an off loading event **104.** In one example, the computer system **700** is further configured to determine a new total weight **126** of the vehicle. In one example, the computer system **700** is further configured to determine the value **126** of the change in weight based on the new total weight of the vehicle **10.** The weight may for example be measured in kilos, tons or pounds.

As is illustrated in **FIG. 3B****,** the computer system **700** is further configured to determine loading event information **130.** The loading event information **130** at least comprises vehicle data **100** and the loading event **102** and/or off-loading event **104.**

The computer system **700** comprising processing circuitry **702** is configured to obtain vehicle data **110.** The vehicle data **110** at least includes positioning data **112.** The positioning data **112** pertains to the position of the vehicle **10.** The positioning data may comprise specific coordinates or an area of coordinates. The positioning data **112** may be obtained from a positioning system **30.** The positioning system may for example comprise a global positioning system (GPS).

The vehicle data **110** further includes time data **114.** The time data **114** pertains to time information. The time information **114** may be a time interval or specific time stamps. In one example the time information is given in small increments, such as minutes. In one example, the time data **114** may relate to the time of the day, such as a specific time or time range (morning, midday/noon, afternoon evening, night). The information relating to the time may be received from a remote server, such as the remote server as defined with reference to **FIG. 1****,** being in communication with the vehicle or from on-board server of the vehicle.

In one example, the vehicle data **110** further includes distance data **118.** Distance data **118** may pertain to the distance traveled by the vehicle. The distance data **118** may be obtained from an odometer **25** arranged in the vehicle **10.**

In one example, the vehicle data **110** further includes energy consumption data **116.** The energy consumption data **116** pertains to a value of how much energy the vehicle is consuming.

In one example, the vehicle data **110** further includes information pertaining to the one or more drivers **1** of the vehicle **10.** The information may be ID-information of the driver **1.**

The loading event information **130** may further comprise site information **132,** driver information **134** and/or billing information **136.** The site information **132** may comprise an identification of a site **106.** The identification may be based on associating the loading event **102** or off-loading event **104** of the vehicle **10** with the position data **112** of the vehicle data **110.** In other words, the loading/un-loading site **106** may be identified by connecting the position data **112** with the loading/off-loading event **102, 104.**

Driver information **134** may comprise information identifying the driver **1** of the vehicle **10.** The driver information **134** is preferably based on vehicle data **110.** In one example, the driver information **134** is based on driver data **119** of the vehicle data **110.**

Billing information **136** may comprise billing information of the loading event 102 and/or the off-loading event **104.**

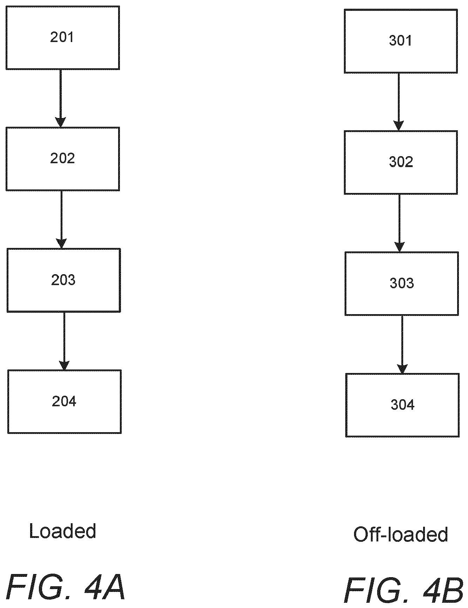

FIGS. 4A-B are flow charts of examples of methods to load **(****FIG. 4A****)** and off-load **(****FIG. 4B****)** a vehicle at a site **106.** Turning to **FIG. 4A****,** an unloaded vehicle is arriving **201** at a loading site. An unloaded vehicle may also be referred to as a vehicle having no external load, an empty vehicle, or a vehicle without any cargo.

The vehicle that is about to get loaded with cargo reduces the driving speed upon reaching a targeted loading area in the loading site. In one example, the vehicle **10** is put in a stationary or parked position **202** before initiating the loading of the cargo onto the vehicle **10.** In an alternative example, the vehicle **10** is moving at a reduced speed **202** once the cargo is loaded onto the vehicle **10.** The reduced speed is preferably very slow, such as for example 5 - 10 km/h.

The vehicle **10** is then loaded **203** with cargo arranged at the loading site **106.** The vehicle **10** may be fully loaded, or only partly loaded. Once the vehicle **10** is loaded with its cargo, the vehicle departs **204** from the loading site **106.** If the vehicle **10** was loaded from a stand still position, departing from the loading site includes increasing the speed from zero to a suitable driving speed. If the vehicle **10** was loaded while having a reduced speed, not being stand-still, departing from the loading site includes increasing the speed from the reduced speed to a suitable driving speed.

Turning to **FIG. 4B****,** a loaded vehicle is arriving **301** at a loading site. The vehicle is driving at a reduced speed **302,** or is in a stationary or parked position **302** before it is getting off loaded with cargo arranged at the loading site **106.** In one example, the vehicle is driving at a reduced speed **302** when unloading the cargo. This may for example be the case when a vehicle is driven in reverse to off-load the cargo from the vehicle.

The vehicle **10** is then off-loaded, i.e. the cargo, or parts of the cargo, of the vehicle is off loaded onto the loading site **106.** The vehicle **10** may be fully emptied, or only partly emptied. Once the vehicle **10** is off-loaded with at least some of its cargo, the vehicle departs **304** from the loading site **106.** If the vehicle **10** was off loaded from a stand still position, departing from the loading site includes increasing the speed from zero to a suitable driving speed. If the vehicle **10** was off loaded while having a reduced speed, not being stand-still, departing from the loading site includes increasing the speed from the reduced speed to a suitable driving speed.

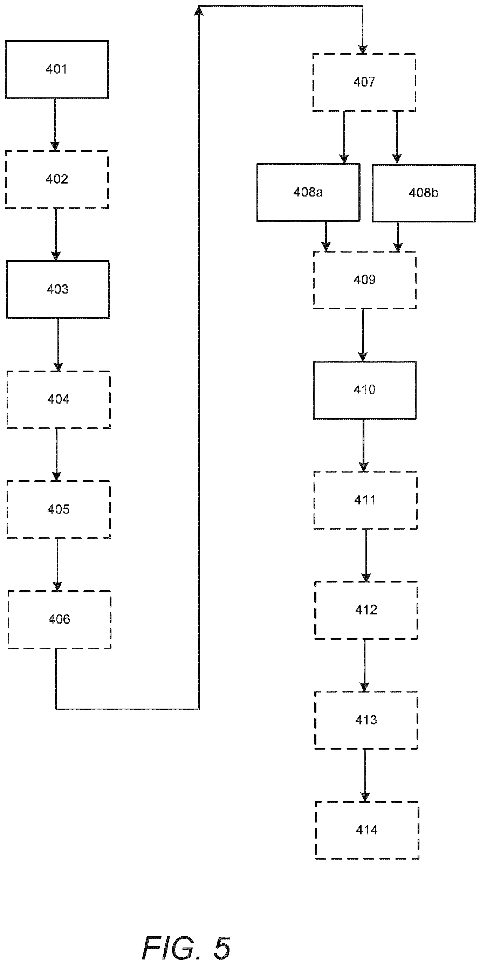

**FIG. 5** is an illustrative flow chart of an example of a method during a loading event and an off-loading event.

In one example, the computer system **700** of the vehicle **10** detects **401** a change in weight of the vehicle. In one example, the method further comprises identifying **402** that the detected change in weight is above a predetermined threshold. The threshold may be defined in any size depending on for example the intended cargo. As an example, the threshold may be 1000 kg. In one example, computer system **700** saves the change in weight as a preliminary weight change. In one example, the new weight of the vehicle **10** is not yet determined.

The method further comprises obtaining **403** vehicle data **110** of the vehicle **10,** this is preferably performed by the computer system **700.** The vehicle data **110** may be obtained from the vehicle **10.** In one example, the vehicle data **110** is obtained when a detected change in weight is determined. In one example, the vehicle data **110** is obtained when the detected change in weight is above a predetermined threshold. In one example, the vehicle data **110** is obtained continuously. In one example, the vehicle data **110** is obtained as a response to detecting the change in weight.

Once the vehicle data **110** is obtained, the vehicle data **110** is saved. The vehicle data **110** may be saved in a memory of the computer system **700.** In one example, the vehicle data **110** is saved when the detected change in weight is above a predetermined threshold. In one example, the vehicle data **110** is saved upon being obtained.

In one example, the method further comprises determining **404** that the weight of the vehicle **10** is stabilized. The weight of the vehicle **10** is stabilized once the load/off-loading event is completed. The computer system **700** may be configured to determine that the weight of the vehicle is stabilized when no weight difference is detected for a predetermined time frame. The computer system **700** may be configured to determine that the weight of the vehicle is stabilized when the weight difference detected is the same for a predetermined time frame. The computer system **700** may be configured to determine that the weight of the vehicle is stabilized when the new total weight of the vehicle **10** is established within a predetermined range.

In one example, the method comprises determining **405** the new weight of the vehicle **10.** In one example, this is performed by the computer system **700** of the vehicle. In one example, the computer system **700** determines the new weight of the vehicle **10** once it is determined that the weight of the vehicle is stabilized.

The determination of the new weight may be based on the on-board weight measurement system **20.** In one example, the on-board weight measurement system **20** determines the weight while the vehicle **10** is stationary or driving at a reduced speed at the loading site **106.** In one example, the on-board weight measurement system **20** determines the weight while the vehicle **10** is moving, or driving at an increased speed. In yet one example, the on-board weight measurement system **20** estimates a preliminary weight while the vehicle **10** is stationary and determines the weight once the vehicle is moving. As should be understood, other combinations are possible.

In some examples, the on-board weight measurement system **20** uses input from the engine and the gearbox while the vehicle **10** is moving in order to determine the new weight.

The determined weight information is preferably saved. By establishing the new weight of the vehicle **10,** it is also possible to determine the exact detected weight change.

In one example, the method further comprises determining **406** the value of the change in weight. In one example, the value of the change in weight is based on the new total weight of the vehicle **10.**

The method may further comprise determining **407** if the change in weight was due to a loading event **102** or an off loading event **104.** The determination **407** is based on the detected change in weight of the vehicle, the new total weight of the vehicle or a combination of both. In one example, this is performed by the computer system **700.**

If it is detected that the change of weight is a decrease in total weight of the vehicle, the system determines **408a** that an off-loading event **104** has taken place. If the system has detected that the change of weight is an increase in total weight of the vehicle, the system determines **408b** that a loading event **102** has taken place.

In one example, method further comprises determining loading event information **130** by determine **409** the value of the change in weight. The value of the change in weight may preferably be determined based on the new total weight of the vehicle **10.** The determination **409** may also be seen as associating **409** the loading event **102** or off-loading event **104** of the vehicle **10** with the value of the change in weight. In one example, this is performed by the computer system **700.**

The method further comprises determining **410** loading event information **130.** The loading event information **130** at least comprises the vehicle data **110** and the loading event **102** or off loading event **104.** The determination may also be seen as associating **410** the loading/off-loading event with the vehicle data **110.** As the vehicle data **110** comprises information relating to the position of the vehicle, as well as the time, it is possible to connect the vehicle **10,** and thus its driver, with the loading/off-loading event and the loading site **106.** In one example, this is performed by the computer system **700.**

The method may further comprise identifying **411** the loading/un-loading site **106.** The loading event information **130** may comprise site information **132.** The identification may be based on the loading event **102** or off loading event **104** and the vehicle data **110.** The identification **411** may further be based on associating the loading event **102** or off-loading event **104** of the vehicle **10** with the position data **112** of the vehicle data **110.** In other words, the loading/un-loading site **106** may be identified by connecting the position data **112** with the loading/off-loading event **102, 104.** In one example, this is performed by the computer system **700.**

The method may further comprise determining **412** loading event information comprising driver information **134.** The method may comprise identifying **412** the driver of the vehicle **10.** The identification of the driver information may be based at least based on the vehicle data **110.** The identification of the driver may also be seen as connecting **412** the loading or off loading event **102, 104** of the vehicle **10** with a driver being associated with the positioning data **112.** In one example, this is performed by the computer system **700.**

The method may further comprise determining loading event information **130** by determining **413** billing information **136** of the loading or off-loading event **102, 104.** The determination of the billing information **136** may further be seen as associating **413** the driver **1** with billing details **108** of the loading or off-loading event **102, 104.** In one example, this is performed by the computer system **700.**

The method may further comprise associating **414** the loading event **102** or off-loading event **104** to a transportation mission. In other words, the method comprises determining **414** a transportation mission at least based on the loading event **102** or off-loading event **104.** The transportation mission comprises at least one of: transported weight, transport time, transported distance and energy consumed during the transport.

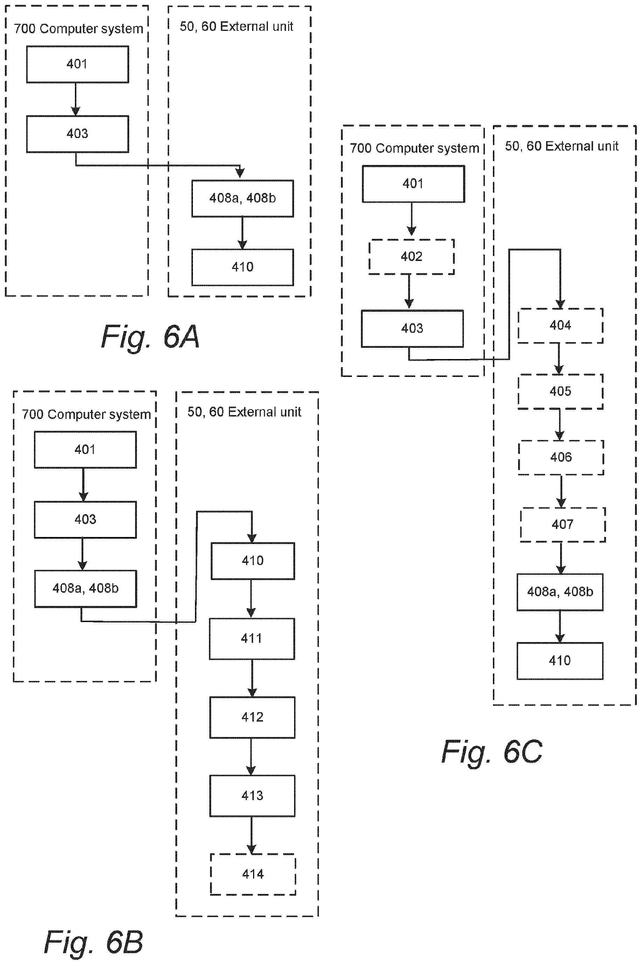

In one example, the computer system **700** is configured to perform all steps. However, as have already been described, some or all of the steps may be performed external to the computer system **700** and/or external to the vehicle. Different examples of methods are disclosed in FIGS. 6A-C.

In one example, as for example shown in **FIG. 6A****,** the vehicle data is transmitted to an external unit such as a centralized server unit **60** or to a cloud-based computing resource **50.** The centralized server unit **60** or the cloud-based computing resource **50** is then configured to determine **408** a loading event **102** or an off-loading event **104.** The centralized server unit **60** or the cloud-based computing resource **50** may further be configured to determine **410** loading event information **130.** Hence, at least steps **408** and **410** may be performed by another entity than the computer system **700.** If present, the steps **411, 412, 413, 414** may be performed by the centralized server unit **60** or the cloud-based computing resource **50.** As should be understood, a mixture of determination steps is possible where the computer system **700** performs some steps and the centralized server unit **60** or the cloud-based computing resource **50** performs other.

In one example, a computer system comprising processing circuitry **702** configured to detect a change in weight **120** of the vehicle **10** when the vehicle is stationary or moving at a reduced speed, obtain vehicle data **110** of the vehicle **10,** wherein the vehicle data **110** at least comprises positioning data **112** and time data **114,** transmit the detected change in weight and the vehicle data **110** to an external unit **50, 60.** The external unit is configured to determine a loading event **102** or an off loading event **104** of the vehicle **10,** wherein the determination at least is based on the detected change in weight of the vehicle **10;** and transmit the loading event or off loading event **102, 104** and the vehicle data **110** to an external unit **50, 60,** wherein said external unit **50, 60** is configured to determine loading event information **130** at least based on vehicle data **110** and the determined loading event **102** or off loading event **104.**

In one example, an external unit (such as a cloud-based computing resource **50** or a centralized server unit **60)** is configured to: receive a detected change in weight and vehicle data, determine a loading event **102** or an off-loading event **104,** and determine loading event information **130** at least based on vehicle data **110** and the determined loading event **102** or off-loading event **104.** In some examples, the external unit is further configured to determine site information **132,** determine driver information **134** and/or determined billing information **136.**

As illustrated in the example of **FIG. 6B****,** the determination of a loading event **102** or an off-loading event **104** may be performed by the computer system **700.** In this example, the loading event **102, 104** is then transmitted to the external unit **50, 60.** The external unit external unit **50, 60** may then be configured to determine **410** loading event information **130.** In this example, the external unit **50, 60** is further configured to identifying **411** the loading/un-loading site **106,** determining **412** driver information **134,** determining **413** billing information **136** of the loading or off loading event **102, 104** and possibly also determining **414** a transportation mission at least based on the loading event **102** or off loading event **104.**

In one example, a computer system comprising processing circuitry **702** configured to detect a change in weight **120** of the vehicle **10** when the vehicle is stationary or moving at a reduced speed, obtain vehicle data **110** of the vehicle **10,** wherein the vehicle data **110** at least comprises positioning data **112** and time data **114,** determine a loading event **102** or an off loading event **104** of the vehicle **10,** wherein the determination at least is based on the detected change in weight of the vehicle **10;** and transmit the loading event or off-loading event **102, 104** and the vehicle data **110** to an external unit **50, 60,** wherein said external unit **50, 60** is configured to determine loading event information **130** at least based on vehicle data **110** and the determined loading event **102** or off-loading event **104.**

In one example, the external unit **50, 60** may be configured determine site information **132,** wherein the site information **132** is determined at least based on the loading event **102** or off loading event **104** and the vehicle data **110.**

In one example, the external unit **50, 60** may be configured to determine driver information **134** identifying the driver **1** of the vehicle **10,** wherein the driver information **134** is determined at least based on the vehicle data **110.**

In one example, the external unit **50, 60** may be configured to determined billing information **136** of the loading or off loading event **102, 104.**

In one example, the external unit **50,60** is an cloud-based computing resource **50** or a centralized server unit **60.**

In one example, an external unit (such as a cloud-based computing resource **50** or a centralized server unit **60)** is configured to: receive a loading event **102** or an off loading event **104,** determine loading event information **130** at least based on vehicle data **110** and the determined loading event **102** or off loading event **104.** In some examples, the external unit is further configured to determine site information **132,** determine driver information **134** and/or determined billing information **136.**

**FIG. 6C** shows yet one example of a method. In this example, most of the determination steps are performed by the external unit **50, 60.** The external unit **50,60** may for example be configured to determine **404** that the weight of the vehicle **10** is stabilized, determine **405** the new weight of the vehicle **10,** determine **406** the value of the change in weight and determine **407** if the change in weight was due to a loading event **102** or an off-loading event **104.**

In one example, a computer system comprising processing circuitry **702** is configured to: detect a change in weight **120** of the vehicle **10** when the vehicle is stationary or moving at a reduced speed, obtain vehicle data **110** of the vehicle **10,** wherein the vehicle data **110** at least comprises positioning data **112** and time data **114,** transmit vehicle data **110** to a centralized server unit **60,** wherein the centralized server unit **60** is configured to determine a loading event **102** or an off loading event **104** of the vehicle **10,** wherein the determination at least is based on the detected change in weight of the vehicle **10,** and determine loading event information **130,** wherein the loading event information **130** at least comprises the vehicle data **110** and the loading event **102** or off-loading event **104.** In one example, the centralized server unit **60** is further configured to determine the site information **132,** identifying the driver and/or determine billing information **136.**

In one example, a computer system comprising processing circuitry **702** is configured to: detect a change in weight **120** of the vehicle **10** when the vehicle is stationary or moving at a reduced speed, obtain vehicle data **110** of the vehicle **10,** wherein the vehicle data **110** at least comprises positioning data **112** and time data **114,** transmit vehicle data **110** to a cloud-based computing resource **50,** wherein the cloud-based computing resource **50** is configured to determine a loading event **102** or an off loading event **104** of the vehicle **10,** wherein the determination at least is based on the detected change in weight of the vehicle **10,** and determine loading event information **130,** wherein the loading event information **130** at least comprises the vehicle data **110** and the loading event **102** or off loading event **104.** In one example, the cloud-based computing resource **50** is further configured to determine the site information **132,** identifying the driver and/or determine billing information **136.**

In one example, a computer system comprising processing circuitry configured to: transmit weight data to an external unit, wherein the external unit is configured to detect a change in weight of the vehicle when the vehicle is stationary or moving at a reduced speed based on said received weight data, transmit vehicle data of the vehicle to the external unit, wherein the vehicle data at least comprises positioning data and time data; and wherein the external unit is configured to: determine a loading event or an off-loading event of the vehicle, wherein the determination at least is based on the detected change in weight of the vehicle; and determine loading event information wherein the loading event information at least comprises the vehicle data and the determined loading event or off loading event.

In one example, an external unit **50, 60** is configured to: receive weight data, detect a change in weight of the vehicle **10** when the vehicle is stationary or moving at a reduced speed based on said received weight data, receive vehicle data **110,** determine a loading event **102** or an off loading event **104,** and determine loading event information **130** at least based on vehicle data **110** and the determined loading event **102** or off loading event **104.** In some examples, the external unit is further configured to determine site information **132,** determine driver information **134** and/or determined billing information **136.**

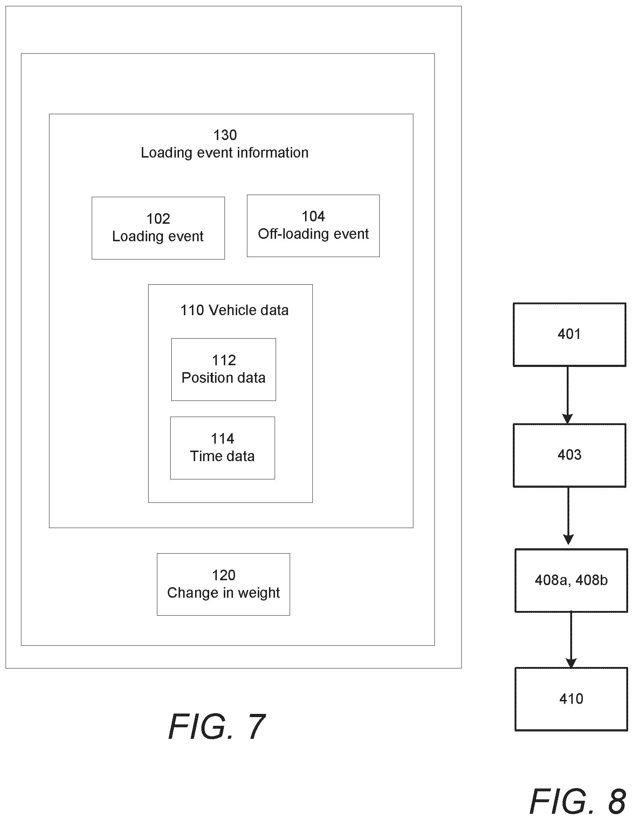

**FIG. 7** is another view of **FIG. 3B** according to an example. A computer system comprising processing circuitry **702** configured to: detect a change in weight **120** of the vehicle **10** when the vehicle is stationary or moving at a reduced speed, obtain vehicle data **110** of the vehicle **10,** wherein the vehicle data **110** at least comprises positioning data **112** and time data **114,** determine a loading event **102** or an off loading event **104** of the vehicle **10,** wherein the determination at least is based on the detected change in weight of the vehicle **10,** and determine loading event information **130,** wherein the loading event information **130** at least comprises the vehicle data **110** and the loading event **102** or off-loading event **104.**

**FIG. 8** is a flow chart of a method to determine a loading event or off loading event according to an example. A computer-implemented method is provided. The method comprises detecting **401,** by processing circuitry of a computer system, a change in weight **120** of the vehicle **10** when the vehicle is stationary or moving at a reduced speed, obtaining **403,** by the processing circuitry, vehicle data **110** of the vehicle **10,** wherein the vehicle data **110** at least comprises positioning data **112** and time data **114.** The method further comprises determining, by the processing circuitry, a loading event **102** or an off loading event **104** of the vehicle **10,** wherein the determination is made based on the detected change in weight of the vehicle; and determining **410,** by the processing circuitry, loading event information **130** wherein the loading event information at least comprises the vehicle data **110** and the determined loading event **102** or off loading event **104.**

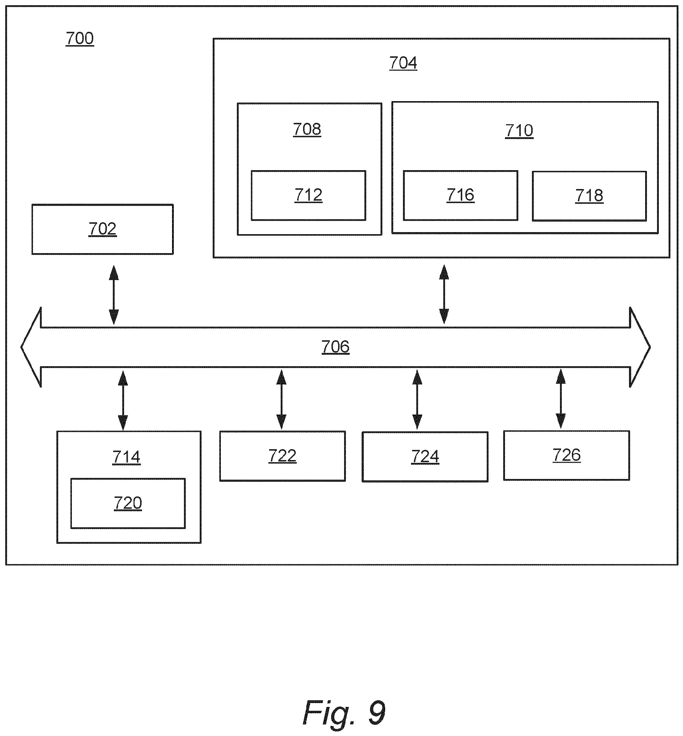

**FIG. 9** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702**(e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702**may include any number of hardware components for conducting data or signal processing or for executing computer code stored in memory **704.** The processing circuitry **702**may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702**may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702**(e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702**to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702**may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702**through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry **702** configured to: detect a change in weight **120** of the vehicle **10** when the vehicle is stationary or moving at a reduced speed, obtain vehicle data **110** of the vehicle **10,** wherein the vehicle data **110** at least comprises positioning data **112** and time data **114,** determine a loading event **102** or an off-loading event **104** of the vehicle **10,** wherein the determination at least is based on the detected change in weight of the vehicle **10,** and determine loading event information **130,** wherein the loading event information **130** at least comprises the vehicle data **110** and the loading event **102** or off-loading event **104.**

Example 2: The computer system of example 1, wherein the processing circuitry is further configured to determine loading event information **130** by determine a new total weight **126** of the vehicle.

Example 3: The computer system of any of examples, wherein the processing circuitry is further configured to determine loading event information **130** by determine that the weight of the vehicle is stabilized, and determine a new total weight **126** of the vehicle.

Example 4: The computer system of example 2 or 3, wherein the processing circuitry is further configured to determine loading event information **130** by determine the value of the change in weight based on the new total weight of the vehicle **10.**

Example 5: The computer system of any of examples 2-4, wherein the new total weight **126** of the vehicle **10** is determined using at least an on-board weight measurement system **20.**

Example 6: The computer system of any of examples 1-5, wherein the loading event information **130** comprises site information **132,** wherein the site information **132** is identified at least based on the loading event **102** or off loading event **104** and the vehicle data **110.**

Example 7: The computer system of any of examples 1-6, wherein the loading event information **130** comprises driver information **134** identifying the driver 1 of the vehicle **10,** wherein the driver information **134** is determined at least based on the vehicle data **110.**

Examples 8: The computer system of example 7, wherein the loading event information **130** further comprises billing information **136** of the loading or off-loading event **102, 104.**

Example 9: The computer system of any of examples 1-8, wherein the vehicle data **110** further comprises one or more of: energy consumption of the vehicle **116,** ID-information of the driver, and an odometer value.

Example 10: The computer system of any of examples 1-9, wherein the processing circuitry is further configured to determine a transportation mission based on the loading and/or off loading event **102, 104,** wherein the transportation mission comprises at least one of transported weight, transport time, transported distance and energy consumed during transport.

Example 11: A vehicle comprising the computer system of any of examples 1-10.

Example 12: A computer-implemented method, comprising detecting **401,** by processing circuitry of a computer system, a change in weight **120** of the vehicle **10** when the vehicle is stationary or moving at a reduced speed, obtaining **403,** by the processing circuitry, vehicle data **110** of the vehicle **10,** wherein the vehicle data **110** at least comprises positioning data **112** and time data **114,** determining **408a, 408b,** by the processing circuitry, a loading event **102** or an off loading event **104** of the vehicle **10,** wherein the determination is made based on the detected change in weight of the vehicle, and determining **410,** by the processing circuitry, loading event information **130,** wherein the loading event information **130** at least comprises vehicle data **110** and loading event **102** or off loading event **104.**

Example: 13: The method of example 12, further comprising: determining **412** driver information **134** by identifying a driver **1** of the vehicle at least based on positioning data **112,** and determining **413** billing details **108** of the loading or off-loading event **102, 104.**

Example 14: A computer program product comprising program code for performing, when executed by the processing circuitry, the method of any of examples 12-13.

Example 15: A non-transitory computer-readable storage medium comprising instructions, which when executed by the processing circuitry, cause the processing circuitry to perform the method of any of examples 12-13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry (702) configured to:
detect a change in weight (120) of the vehicle (10) when the vehicle is stationary or moving at a reduced speed,
obtain vehicle data (110) of the vehicle (10), wherein the vehicle data (110) at least comprises positioning data (112) and time data (114);
determine a loading event (102) or an off-loading event (104) of the vehicle (10), wherein the determination at least is based on the detected change in weight of the vehicle (10); and
determine loading event information (130), wherein the loading event information (130) at least comprises the vehicle data (110) and the determined loading event (102) or off-loading event (104).

2. The computer system of claim 1, wherein the processing circuitry is further configured to determine loading event information (130) by:
determine a new total weight (126) of the vehicle.

3. The computer system of any of claims, wherein the processing circuitry is further configured to determine loading event information (130) by:
determine that the weight of the vehicle is stabilized; and
determine a new total weight (126) of the vehicle.

4. The computer system of claim 2 or 3, wherein the processing circuitry is further configured to determine loading event information (130) by:
determine the value of the change in weight based on the new total weight of the vehicle (10).

5. The computer system of any of claims 2-4, wherein the new total weight (126) of the vehicle (10) is determined using at least an on-board weight measurement system (20).

6. The computer system of any of claims 1-5, wherein the loading event information (130) comprises site information (132), wherein the site information (132) is identified at least based on the loading event (102) or off-loading event (104) and the vehicle data (110).

7. The computer system of any of claims 1-6, wherein the loading event information (130) comprises driver information (134) identifying the driver (1) of the vehicle (10), wherein the driver information (134) is determined at least based on the vehicle data (110).

8. The computer system of claim 7, wherein the loading event information (130) further comprises billing information (136) of the loading or off-loading event (102, 104).

9. The computer system of any of claims 1-8, wherein the vehicle data (110) further comprises one or more of: energy consumption of the vehicle (116), ID-information of the driver, and an odometer value.

10. The computer system of any of claims 1-9, wherein the processing circuitry is further configured to:
determine a transportation mission based on the loading and/or off loading event (102, 104), wherein the transportation mission comprises at least one of transported weight, transport time, transported distance and energy consumed during transport.

11. A vehicle comprising the computer system of any of claims 1-10.

12. A computer-implemented method, comprising:
detecting (401), by processing circuitry of a computer system, a change in weight (120) of the vehicle (10) when the vehicle is stationary or moving at a reduced speed,
obtaining (403), by the processing circuitry, vehicle data (110) of the vehicle (10), wherein the vehicle data (110) at least comprises positioning data (112) and time data (114);
determining (408a, 408b), by the processing circuitry, a loading event (102) or an off-loading event (104) of the vehicle (10), wherein the determination is made based on the detected change in weight of the vehicle; and
determining (410), by the processing circuitry, loading event information (130), wherein the loading event information (130) at least comprises the vehicle data (110) and the determined loading event (102) or off loading event (104).

13. The method of claim 12, further comprising:
determining (412) driver information (134) identifying the driver (1) of the vehicle (10) at least based on positioning data (112) of the vehicle data (110), and
determining (413) billing details (108) of the loading or off-loading event (102, 104).

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
